# EUROPEAN PATENT APPLICATION

(11) **EP 4 764 778 A1**
(43) Date of publication of application: **24.06.2026**
(21) Application number: 25218649.9
(22) Date of filing: 26.11.2025
(51) Int. Cl.: G06F 1/16, G06K 7/10

(54) **CONFIGURABLE DOCKING DEVICE FOR ELECTRONIC DEVICE SYSTEMS**

(30) Priority: 18.12.2024 CN 202411873890
(71) Applicant: Hand Held Products, Inc., Charlotte, NC 28202 (US)
(72) Inventor: CHEN, Zhe, Charlotte, 28202 (US); YAN, Xianwei, Charlotte, 28202 (US); RUEBLINGER, Gregory, Charlotte, 28202 (US); ZHOU, Ke, Charlotte, 28202 (US); WU, Yu, Charlotte, 28202 (US); ASPENNS, Glenn David, Charlotte, 28202 (US)
(74) Representative: Haseltine Lake Kempner LLP

(57) **Abstract**

Embodiments of the present disclosure provide an electronic device system. The electronic device system may include an electronic device and a docking device for releasably securing the electronic device to the docking device. The docking device may be operable in at least two coupling modes. The docking device may comprise a latch movable between a first latch configuration corresponding to a first coupling mode and a second latch configuration corresponding to a second coupling mode. The latch and the head portion may be spaced apart when the docking device is in the first coupling mode. The latch may engage the head portion when the docking device is in the second coupling mode. A switch assembly may be coupled to the latch. The latch may be configured for being moved between the first latch configuration and the second latch configuration via operation of the switch assembly.

## Description

### FIELD OF THE INVENTION

The present disclosure relate to electronic device systems and, more particularly, to configurable docking device for electronic device systems.

### BACKGROUND

Applicant has identified many technical challenges and difficulties associated with docking devices and electronic device systems that include a docking device. Through applied effort, ingenuity, and innovation, Applicant has solved many of these identified problems by developing the embodiments of the present disclosure, which are described in detail below.

### BRIEF SUMMARY

In accordance with one aspect of the present disclosure, an electronic device system is provided. In an example embodiment, the electronic device system comprises an electronic device comprising a head portion; a docking device for releasably securing the electronic device to the docking device, wherein the docking device is operable in at least two coupling modes; the docking device comprising a latch movable between a first latch configuration corresponding to a first coupling mode of the at least two coupling modes and a second latch configuration corresponding to a second coupling mode of the at least two coupling modes, wherein the latch and the head portion are spaced apart when the docking device is in the first coupling mode, and wherein the latch engages the head portion when the docking device is in the second coupling mode; and a switch assembly coupled to the latch, wherein the latch is configured for being moved between the first latch configuration and the second latch configuration via operation of the switch assembly.

In some embodiments, the electronic device is a hand-held scanner, and wherein the electronic device further comprises a handle portion extending between the head portion and a bottom portion of the electronic device.

In some embodiments, the latch comprises a head coupling portion, and wherein the electronic device defines an opening configured to receive the head coupling portion when in the second coupling mode.

In some embodiments, the head coupling portion is configured to extend a first length within the opening defined by the electronic device when the latch is in the second latch configuration.

In some embodiments, the head coupling portion is configured to extend a second length within the opening defined by the electronic device when the latch is in a third latch configuration, wherein the second length is longer than the first length.

In some embodiments, the switch assembly comprises a latch switch and a switch cover mounted on the latch switch, wherein the latch switch defines an outer facing portion of the switch assembly accessible to a user and the switch cover defines an inner facing portion of the switch assembly.

In some embodiments, the switch cover is substantially oval.

In some embodiments, the docking device comprises a head receiving portion and a bottom receiving portion, wherein the head receiving portion is configured to receive the head portion of the electronic device and the bottom receiving portion is configured to receive a bottom portion of the electronic device.

In some embodiments, at least one of the head receiving portion or the bottom receiving portion comprises one or more alignment features configured to facilitate gravity drop-in of the electronic device with respect to the docking device.

In some embodiments, the latch further comprises a pivot portion configured to cause the latch to rotate when the pivot portion is engaged.

In some embodiments, the latch switch is configured for being moved between at least a first position corresponding to the first coupling mode and a second position corresponding to the second coupling mode, wherein the switch cover engages the pivot portion when the latch switch is in the first position, and wherein the head coupling portion of the latch is configured to be positioned outside of an interior of the head receiving portion of the docking device.

In some embodiments, the switch cover and the pivot portion are spaced apart when the latch switch is in the second coupling mode, wherein the head coupling portion of the latch is configured to extend within the interior of the docking device.

In some embodiments, the first coupling mode is configured for a horizontal application of the docking device, and wherein the second coupling mode is configured for a vertical application or a mobile application of the docking device.

In some embodiments, the switch cover comprises at least a first locking portion corresponding to the first position of the latch switch and a second locking portion corresponding to the second position of the latch switch.

In accordance with another aspect of the present disclosure, a docking device for releasably securing an electronic device to the docking device is provided. In an example embodiment, the docking device comprises a latch movable between a first latch configuration corresponding to a first coupling mode of the docking device and a second latch configuration corresponding to a second coupling mode of the docking device, wherein the latch and the electronic device are spaced apart when the docking device is in the first coupling mode, and wherein the latch engages the electronic device when the docking device is in the second coupling mode; and a switch assembly coupled to the latch, wherein the latch is configured for being moved between the first latch configuration and the second latch configuration via operation of the switch assembly.

In some embodiments, the latch comprises a head coupling portion configured to be inserted within an opening defined by the electronic device when the docking device is in the second coupling mode.

In some embodiments, the switch assembly comprises a latch switch and a switch cover mounted on the latch switch, wherein the latch switch defines an outer facing portion of the switch assembly accessible to a user and the switch cover defines an inner facing portion of the switch assembly.

In some embodiments, the switch cover is substantially oval.

In some embodiments, the docking device further comprises a head receiving portion and a bottom receiving portion, wherein the head receiving portion is configured to receive a head portion of the electronic device and the bottom receiving portion is configured to receive a bottom portion of the electronic device.

In some embodiments, at least one of the head receiving portion or the bottom receiving portion comprises one or more alignment features configured to facilitate gravity drop-in of the electronic device with respect to the docking device.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 illustrates an example electronic device system in accordance with at least one embodiment of the present disclosure
FIG. 2 is an exploded view of a head receiving portion of an example docking device in accordance with at least one embodiment of the present disclosure.

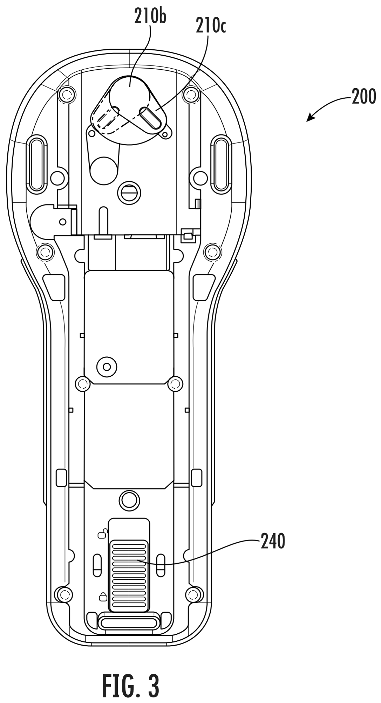

FIG. 3 is a bottom view of an example docking device in accordance with at least one embodiment of the present disclosure.
FIG. 4A illustrates a bottom view of a docking device in a first coupling mode in accordance with at least one embodiment of the present disclosure.
FIG. 4B illustrates a cross-sectional view of a head receiving portion of an example docking device in a first coupling mode in accordance with at least one embodiment of the present disclosure.
FIG. 4C illustrates a switch cover in a first coupling mode in accordance with at least one embodiment of the present disclosure.
FIG. 5A illustrates a bottom view of a docking device in a second coupling mode in accordance with at least one embodiment of the present disclosure.
FIG. 5B illustrates a cross-sectional view of a head receiving portion of an example docking device in a second coupling mode in accordance with at least one embodiment of the present disclosure.
FIG. 5C illustrates a switch cover in a second coupling mode in accordance with at least one embodiment of the present disclosure.
FIGS. 6A-6E illustrate a bottom view of a portion of an example docking device in accordance with at least some embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

Terms such as "computing," "determining," "generating," and/or similar words are used herein interchangeably to refer to the creation, modification, or identification of data. Further, "based on," "based on in part on," "based at least on," "based upon," and/or similar words are used herein interchangeably in an open-ended manner such that they do not indicate being based only on or based solely on the referenced element or elements unless so indicated. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

As used herein, the term "or" is used in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based on in part on," "based at least on," "based upon," and/or similar words are used herein interchangeably in an open-ended manner such that they do not indicate being based only on or based solely on the referenced element or elements unless so indicated. Like numbers refer to like elements throughout.

Electronic devices are often provided with a docking device, such as a charging base, to hold the electronic device and/or recharge a battery of the electronic device. For some applications for the electronic device, it is desirable to set the docking device on a generally horizontal stationary surface, such as a tabletop or countertop. In other applications for the electronic device, it is desirable to mount the docking device on a generally vertical stationary surface, such as a wall. Yet in other applications for the electronic device, it is desirable to mount the docking device on movable equipment, such as a forklift or other vehicle.

Because of the various applications for the electronic device, users of the electronic device may want to adjust the force required to attach and/or detach the electronic device to/from the docking device based on the current application for the electronic device and/or the location, position, and/or mounting status of the docking device. However, existing technologies in this field do not allow for such adjustment of force required to attach and/or detach the electronic device to/from the docking device. Specifically, existing technologies are not adaptable to the current application. Moreover, existing technologies require a user to self-align the electronic device and the docking device in other to secure the electronic device to the docking device, which is often challenging and time consuming for a user. Further existing docking devices with a power supply are unable to prevent water ingress.

Example embodiments of the present disclosure address the above-mentioned problems. Example embodiments of the present disclosure provide a configurable docking device capable of being adjusted to suite the current application. For example, the docking device may be configured to allow a user to easily and quickly secure an electronic device, such as a handheld scanner, to the docking device in a horizontal application of the docking device and may be configured to provide reliable coupling of the electronic device to the docking device in a vertical application of the docking device. Additionally, or alternatively, the docking device may be configured to provide reliable retention of the electronic device to the docking device in a mobile application, such as where the docking device is mounted to a movable object such as a forklift or other vehicle.

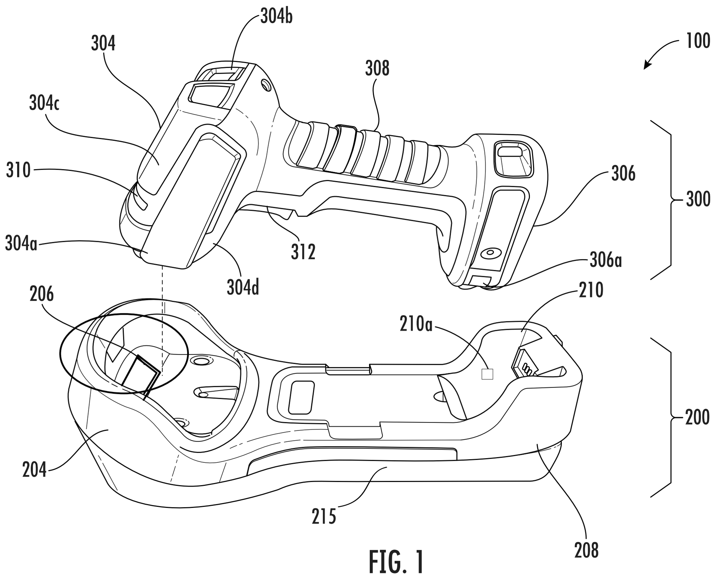

FIG. 1 illustrates an example electronic device system 100 in accordance with at least some embodiments of the present disclosure. As shown in FIG. 1, the electronic device system 100 comprises a docking device 200 and an electronic device 300. The electronic device 300 may be a handheld scanner (e.g., a handheld barcode scanner, a quick response code (QR code) scanner, and/or the like) configured for scanning and/or reading machine readable code such as, but not limited to, barcodes, QR codes, 2D codes, and/or the like.

The illustrated example electronic device 300 of FIG. 1 may comprise a head portion 304, a bottom portion 306, and a handle portion 308. The head portion 304 may comprise a front end 304a, a rear end 304b, an upper surface 304c, and a lower surface 304d. The head portion 304 may define an indicia scanning window and/or house one or more optical components, imaging components, and/or other components configured to support the scanning functionality of the electronic device 300. For example, the head portion 304 may comprise one or more lens, one or more illuminating devices, one or more cameras, and/or the like. As shown in FIG. 1, the head portion 304 may have an arcuate shape, and may be configured for being received by a head receiving portion 204 of the docking device 200 described further below.

The handle portion 308 may extend from the head portion 304 and may comprise a trigger button 312. In the illustrated example of FIG. 1, the trigger button 312 is positioned on a lower surface of the handle portion 308 and proximate to an end of the handle portion closer to the head portion 304. It would be appreciated that in other examples, the trigger button 312 may be positioned on other portions of the handle portion 308 or may be positioned on the head portion 304 or bottom portion 306 of the electronic device 300. The trigger button 312 may be configured to activate and/or disactivate an operation of the electronic device such as, for example, scanning operation.

The docking device 200 may be configured for being positioned on a support structure without fastening to the support structure. Additionally, or alternatively, the docking device 200 may be configured for being positioned on a support structure with one or more fasteners. For example, the docking device 200 may be configured for being positioned horizontally on a support structure (such as a table, a floor, desk, or the like) without being fastened to the support structure and/or may be configured for being positioned vertically on a support structure such as a wall, a bar, and/or the like via one or more fasteners. In some embodiments, additionally, or alternatively, the docking device 200 may be configured for being positioned at an angle (e.g., positioned at an incline).

Additionally, or alternatively, the docking device 200 may be configured for being coupled to a stationary support structure, such as a table, a wall, a floor, or the like. Additionally, or alternatively, the docking device 200 may be configured for being coupled to a movable object such as a user, a vehicle (e.g., forklift, car, and/or the like), or the like. In some embodiments, the docking device 200 may be a charging base that is also configured to hold the electronic device 300. In some embodiments, the docking device 200 may be a passive base (e.g., not a charging base) configured to hold the electronic device 300, for example, when not in use.

The docking device 200 may be configured to receive the electronic device 300 such that the electronic device 300 may be removably secured (e.g., removably attached, removably coupled, or similar terms) to the docking device 200. The docking device 200 may comprise a head receiving portion 204, a bottom receiving portion 208, and a middle portion 215 between the head receiving portion 204 and the bottom receiving portion 208. For example, the head receiving portion 204 may correspond to a first end portion of the docking device 200 and the bottom receiving portion 208 may correspond to a second end portion of the docking device 200 that are spaced apart by the middle portion 215. The head receiving portion 204 may define a first interior 206 for receiving the head portion 304 of the electronic device 300. For example, the head receiving portion 204 may be configured for receiving at least the front end 304a of the head portion 304. The bottom receiving portion 208 may define a second interior 210 configured for receiving the bottom portion 306 of the electronic device 300.

The docking device 200 may comprise one or more coupling modes. For example, the docking device 200 may be configured for being operated in one or more coupling modes. In some embodiments, the docking device 200 comprises at least two coupling modes. In some embodiments, the at least two coupling modes is defined at least in part by a measure of force required to removably secure the electronic device 300 to the docking device 200 and/or a measure of force required to release the electronic device 300 from the docking device 200.

The docking device 200 may be configured to allow the electronic device 300 to be releasably secured to the docking device 200 with a force that satisfies (e.g., exceeds, equals, to, or the like) a first threshold coupling force when in the first coupling mode. The docking device 200 may be configured to allow the electronic device 300 to be releasably secured to the docking device 200 with a force that satisfies (e.g., exceeds, equals to, or the like) a second threshold coupling force when in the second coupling mode. In some embodiments, the docking device 200 may be configured to allow the electronic device 300 to be releasably secured to the docking device 200 with a force that satisfies (e.g., exceeds, equals to, or the like) a third threshold coupling force when in third coupling mode. For example, in some embodiments, the docking device 200 may comprise two coupling modes (e.g., a first coupling mode and a second coupling mode). As another example, in some embodiments, the docking device 200 may comprise three couple modes (e.g., a first coupling mode, a second coupling mode, and a third coupling mode).

In some embodiments, the first threshold coupling force corresponds to a drop-in force. For example, the first coupling mode may provide, or otherwise allow, gravity drop-in coupling, wherein coupling (e.g., releasably securing) of the electronic device 300 to the docking device 200 may be achieved by dropping the electronic device 300 into the receiving portions (e.g., head receiving portion 204, bottom receiving portion 208) of the docking device 200. For example, the electronic device 300 may be docked (e.g., positioned within) with respect to the docking device 200 with only the force of gravity, such that there is little to no resistance to the electronic device 300 docking. This, in turn, may create a preferred user experience for ease of use and frequent docking. In this regard, the first coupling mode may be designed for use in a horizontal application of the docking device 200, such as when the docking device is horizontally oriented (e.g., when placed on a substantially horizontal support structure). As further described herein, the docking device 200 may be configured to facilitate proper alignment of the electronic device 300 and the docking device 200 when the electronic device 300 is gravity dropped into the receiving portions of the docking device 200. Additionally, the electronic device 300 may be configured to facilitate the gravity drop-in coupling and/or other functionalities associated with the first coupling mode.

In some embodiments, the second threshold coupling force is greater than the first threshold coupling force. For example, the second coupling mode may be designed for use in a vertical application and/or mobile application of the docking device 200, such as when the docking device 200 is vertically orientated and/or coupled to a movable/moving object, and/or for use in an incline application of the docking device 200, such as when the docking device 200 is oriented at an angle. In some embodiments, where there is a third threshold coupling force for a third coupling mode, the third coupling force may be greater that the second threshold coupling force. For example, the third coupling mode may be designed for use in a mobile application to further improve retention of the electronic device 300 to the docking device 200 during movement of the movable object to which the docking device 200 is mounted.

Additionally, or alternatively, the docking device 200 may be configured to allow the electronic device 300 to be released from the docking device 200 with a force that satisfies (e.g., exceeds, equals, to, or the like) a first threshold release force when in the first coupling mode. Additionally, or alternatively, in some embodiments, the docking device 200 is configured to allow the electronic device 300 to be released from the docking device 200 with a force that satisfies (e.g., exceeds, equals to, or the like) a second threshold release force when in the second coupling mode. In some embodiments, the first threshold force is less than the second threshold release force. For example, in the first coupling mode, the electronic device 300 may be configured for being released (e.g., detached) from the docking device 200 with a minimum force corresponding to the first threshold release force.

In the second coupling mode, the electronic device 300 may be configured for being released from the docking device 200 with a minimum force corresponding to the second threshold, wherein the minimum force for releasing the electronic device 300 from the docking device 200 in the first coupling mode is lower than the minimum force for releasing the electronic device 300 from the docking device 200 in the second coupling mode. In example embodiments that comprise a third coupling mode, the electronic device 300 may be configured for being released from the docking device 200 with a minimum force corresponding to a third threshold release force, wherein the minimum force for releasing the electronic device 300 from the docking device 200 in the second coupling mode is lower than the minimum force for releasing the electronic device 300 from the docking device 200 in the third coupling mode.

The docking device 200 may comprise alignment features that are configured to mate with corresponding features on the electronic device 300 to align the electronic device 300 when releasably secured to the docking device 200. In various embodiments, the docking device 200 may be configured to charge a battery of the electronic device 300 or send electrical signals to the electronic device 300 through one or more electrical connections. The alignment features may be configured to ensure proper positioning of the electrical connections of the electronic device 300 so that the electrical connections of the electronic device 300 are in electrical communication with electrical connections of the docking device 200 when the electronic device 300 is secured to or otherwise positioned in the docking device 200. Additionally, or alternatively, the head receiving portion 204 and/or the bottom receiving portion 208 may be dimensioned, shaped, and/or otherwise configured to facilitate automatic alignment of the electronic device 300 and the docking device 200 when the electronic device 300 is gravity-dropped into the docking device 200 (e.g., docked/positioned within the docking device 200 with the force gravity).

Additionally, or alternatively, the docking device 200 may comprise coupling features configured to mate with corresponding features on the electronic device 300 to releasably secure the electronic device 300 to the docking device when the electronic device 300 is received by the docking device 200. In some embodiments, the coupling features comprise one or more retractable members 210a extending from opposing inner side walls of the second interior 210 defined by the bottom receiving portion 208 of the docking device 200. The one or more retractable members 210a may be operable in one or more configurations (e.g., one or more retractable member configurations) corresponding to the one or more coupling modes. Additionally or alternatively, in some embodiments, the coupling features comprise a latch 218 (described further below) operable in one or more configurations corresponding the one or more coupling modes of the docking device 200.

In some embodiments, the coupling features comprise at least two retractable members (which may be embodied as rods, pins, plugs, or the like) disposed within the second interior 210 with a first retractable member of the one or more retractable members 210a extending from a left inner side wall and a second retractable member of the one or more retractable members 210a extending from a right inner side wall and spaced apart from the first retractable member. For example, in some embodiments, the docking device 200 comprises a pair of retractable members 210a disposed within the bottom receiving portion 208 (e.g., the second interior 210 thereof), wherein a first retractable member of the pair of retractable members 210a extends from a left inner side wall of the bottom receiving portion 208 and a second retractable member of the one or more retractable members 210a extends from a right inner side wall, and wherein the first retractable member and the second retractable member are spaced apart. Additionally, in some embodiments, the docking device 200 may comprise a retractable member disposed on the inner rear wall of the bottom receiving portion 208 (e.g., inner back portion of the second interior 210).

The retractable members 210a may be operable in the one or more retractable member configurations via operation of a bottom switch 240. In some embodiments, the bottom switch 240 may be embodied as a sliding element 240 which may be moved to at least a first position and a second position, as further described herein. In some embodiments, the bottom switch is configured for being moved, adjusted, or otherwise set to a first position corresponding to the first coupling mode of the docking device 200 or a second position corresponding to the second coupling mode of the docking device 200. In some embodiments, the bottom switch 240 is configured to cause the retractable members 210a to be in a disabled configuration (e.g., disabled retractable member configuration) when the bottom switch 240 is in the first position and in an active configuration (e.g., active retractable member configuration) when the bottom switch 240 is in the second position. For example, the retractable member(s) 210a may not engage the bottom portion 306 of the electronic device 300 when the bottom switch 240 is in the first position corresponding to the first coupling mode of the docking device 200 and may engage the bottom portion 306 of the electronic device 300 when the bottom switch 240 is in the second position corresponding to the second coupling mode of the docking device 200.

In some embodiments, the retractable members 210a may be configured for being received by one or more openings 306a (e.g., representing coupling features of the electronic device 300) defined by the bottom portion 306 of the electronic device 300. In such some embodiments, when the electronic device 300 is positioned within the docking device 200, the retractable members 210a may not extend into the opening 306a defined by the bottom portion 306 when the bottom switch 240 is in the first position corresponding to the first coupling mode of the docking device and may extend into the opening 306a when the bottom switch 240 is in the second position corresponding to the second coupling mode of the docking device 200. In some embodiments, one or more of the retractable member(s) 210 may have a square shape, a rectangular shape, a round shape, irregular shape, or other suitable shape. In some embodiments where the docking device comprises retractable members positioned on at least one inner side wall as well as the inner rear wall, the retractable member on the rear inner wall may have the same or different shape and/or configuration as a retractable member positioned on the at least one inner side wall. In some embodiments, the retractable members on the side inner walls may have the same or different shapes and/or configuration.

As described above, in some embodiments, the docking device 200 may comprise a sliding element 240 (e.g., representing the bottom switch 240) configured to adjust the retractable members 210a between multiple configurations, including a first configuration where the retractable members 210a are disabled (e.g., a configuration where the retractable members are not used to secure the bottom portion 306 of the electronic device 300 within the second interior 210) and a second configuration where the retractable member are activated (e.g., a configuration where the retractable members are used to secure the bottom portion 306 of the electronic device 300 within the second interior 210). While in the illustrated example, the docking device 200 comprises a sliding element 240 disposed on a bottom of the docking device configured for adjusting the configuration of the retractable member(s) 210a, other features may be used in other embodiments to adjust the configuration of the retractable member(s) 210a. In some embodiments, the sliding element 240 is configured to be positioned in a first position corresponding to the first retractable member configuration of the retractable members 210a and first coupling mode of the docking device 200 or a second position corresponding to the second retractable member configuration of the retractable members 210a and second coupling mode of the docking device 200.

In some embodiments, the bottom switch 240 (e.g., sliding element 240) is designed to be adjusted, moved, or otherwise set (e.g., by a user) to the first position when the latch is set to a first latch configuration (e.g., by a user moving a latch switch described further below to a first switch position) as discussed herein and adjusted, moved, or otherwise set to the second position when the latch is set to a second latch configuration (e.g., by a user moving the latch switch to a second switch position) as discussed herein. For example, the docking device 200 may be configured to be in the first coupling mode when the latch 218 is in a first latch configuration thereof and the retractable member(s) 210a are in a first retractable member configuration thereof, and configured to be in the second coupling mode when the latch 218 is in the second latch configuration thereof and the retractable member(s) 210a are in a second retractable member configuration thereof.

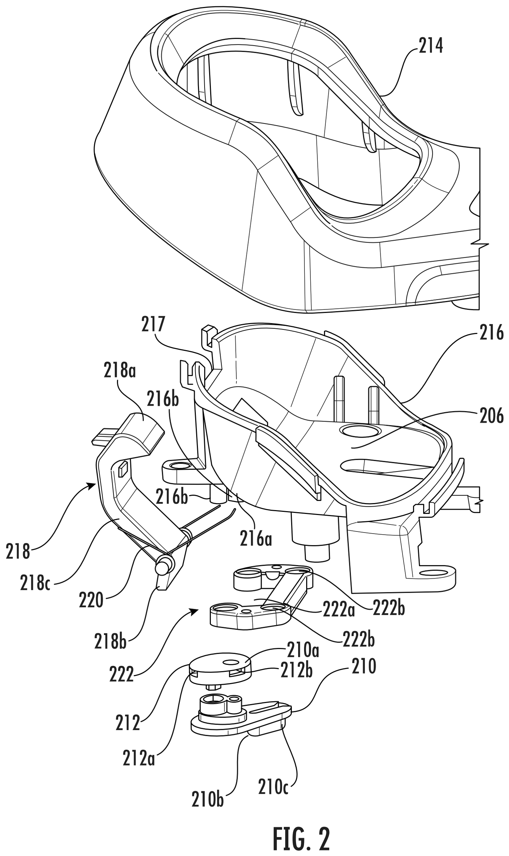

FIG. 2 is an exploded view of the head receiving portion 204 of the example docking device 200 in accordance with at least one embodiment of the present disclosure. The head receiving portion 204 may comprise a top cover 214, a cup 216 defining the first interior 206 of the head receiving portion 204 configured for receiving the head portion 304 of the electronic device 300, a latch assembly, and/or a switch assembly.

In some embodiments, the latch assembly comprises a latch 218, a coupling member 220, and a latch cover 222. The latch 218 may comprise a head coupling portion 218a defined at a first end of the latch 218, a pivot portion 218b defined at a second end of the latch 218 and middle portion 218c extending between the head coupling portion 218a and the pivot portion 218b. The latch 218 may be positioned below and adjacent relative to the upper bottom portion 216a of the cup 216. The middle portion 218c of the latch 218 may have a shape profile that corresponds to the shape of the upper bottom portion 216a of the cup 216. For example, the middle portion 218c may have a shape that is substantially identical to the shape of the upper bottom portion 216a of the cup 216. In some embodiments, the middle portion 218c of the latch 218 and the upper bottom portion 216a of the cup 216 may have a curved shape.

The latch 218 may be coupled to the cup 216 via the coupling member 220. For example, the coupling member 220 may be coupled to the latch 218 and the cup 216 at a first portion and second portion of the coupling member 220. The coupling member 220 may be configured to pivotably secure the latch 218 to the cup 216. For example, the coupling member 220 may allow the latch 218 to be pivoted. As further described below, the latch 218 may be pivotable along a vertical axis and between multiple latch configurations.

In some embodiments, the coupling member 220 comprises a spring having a first portion wrapped around the middle portion 218c and/or pivot portion 218b of the latch 218 and a second portion coupled to the upper bottom portion 216a of the cup 216. The latch cover 222 may configured to support and/or facilitate the pivot functionality of the latch 218. Additionally, or alternatively, the latch cover 222 may be configured to support and/or facilitate coupling of the latch 218 to one or more components of the docking device 200, including the cup 216. The latch cover 222 may be positioned below relative to the upper bottom portion 216a of the cup 216. The latch cover 222 may define an opening 222a configured to receive the pivot portion 218b of the latch 218. The latch cover 222 may define one or more openings 222b configured to receive corresponding coupling members 216b extending downwardly from the bottom of the cup 216.

The latch 218 may be configured for being releasably coupled to the electronic device 300. The head coupling portion 218a may be configured to engage the electronic device 300 when the docking device 200 is in certain coupling mode(s) and the electronic device 300 is positioned on the docking device 200. Specifically, in some embodiments, the head coupling portion 218a is configured to be spaced apart from the electronic device 300 when the docking device 200 is in a first coupling mode (e.g., designed for a horizontal application of the docking device 200) and configured to engage the electronic device 300 when the docking device 200 is a second coupling mode (e.g., designed for a vertical application and/or mobile application of the docking device 200). In some embodiments, docking device 200 may comprise a third coupling mode (e.g., designed for a mobile application). The head coupling portion 218a may be configured to engage the electronic device 300 when the docking device is in a third coupling mode. It will be appreciated that the docking device may comprise additional coupling modes and/or may comprise fewer coupling modes. For example, in some embodiments, the docking device 200 may comprise only a first coupling mode and a second coupling mode.

The head coupling portion 218a may be configured to engage the electronic device 300 via a coupling portion 310 of the electronic device 300 that is configured to mate with the head coupling portion 218a. In some embodiments, the head portion 304 of the electronic device 300 comprises the coupling portion 310. In some embodiments, the coupling portion 310 is a retention port 310 (e.g., an opening) configured to receive the head coupling portion 218a of the latch 218. For example, in some embodiments, the head portion 304 of the electronic device 300 may define the retention port 310.

As described above, the latch 218 may be operable in one or more latch configurations. In some embodiments, the latch 218 is operable in a first latch configuration corresponding to the first coupling mode (e.g., described above) and operable in a second latch configuration corresponding to the second coupling mode (e.g., described above). In some embodiments, the latch 218 may be operable in additional latch configurations. In some embodiments, the latch configurations may be defined at least by the position of the latch 218 relative to a vertical axis. In some embodiments, the latch 218 is positioned at an angle when in the first latch configuration such that the head coupling portion 218a does not extend into the interior 206 defined by head receiving portion 204 (e.g., defined by the cup 216 thereof) of the docking device 200. In some embodiments, the latch 218 is substantially vertical or otherwise in an upright position when in the second latch configuration, such that the head coupling portion 218a extends into the interior 206 defined by head receiving portion 204 (e.g., cup 216 thereof) of the docking device 200 through an opening 217 defined by the cup 216. The latch 218 may be configured to transition between the latch configurations thereof via operation of the switch assembly. In some embodiments, the latch 218 may be configured to transition between a first latch configuration and a second latch configuration via operation of the switch assembly. In some embodiments, the latch 218 may be configured to transition between and among a first latch configuration, a second latch configuration, and a third latch configuration via operation of the switch assembly.

The switch assembly may comprise a latch switch 210 and a switch cover 212. In various embodiments, the latch switch 210 defines an outer facing surface 210b of the switch assembly relative to the bottom of the docking device 200 and the latch cover 222 defines an inner facing surface 210a of the switch assembly. The outer facing surface 210b may be visible and/or accessible to a user. For example, the out facing surface 210b may function at least in part as a user interface for selecting a latch configuration or otherwise selecting a coupling mode of the multiple coupling modes of the docking device 200. For example, a user may move the latch 218 between the latch configurations by moving the latch switch 210 to corresponding switch positions via the outer facing surface 210b. In some embodiments, the latch switch 210 may comprise a handle member 210c extending from and away from the outer facing surface 210b to facilitate user friendly interface with the latch switch 210. It would be appreciated that the switch cover may not include the handle member 210c in some embodiments and/or may comprise other features (e.g., depressed portion, or the like) configured to facilitate user friendly interface with the latch switch. While the switch assembly is located on the bottom of the top portion 204 in the illustrated example, in some other embodiments, the switch assembly and/or one or more components thereof may be located on and/or in other portions of the docking device 200.

The latch switch 210 may be configured for being moved to one or more switch positions as described above. Each switch position may correspond to a particular latch configuration of one or more latch configurations. In some embodiments, the latch switch 210 may be configured for being moved to at least two switch positions, including a first switch position that correspond to the first latch configuration and a second switch position that corresponds to the second latch configuration. In particular, in some embodiments, the latch 218 is configured to move to the first latch configuration when the latch switch 210 is moved to the first switch position and move to the second latch configuration when the latch switch 210 is moved to the second switch position.

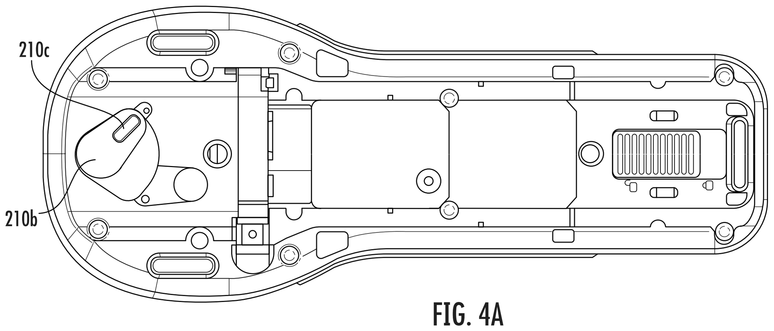

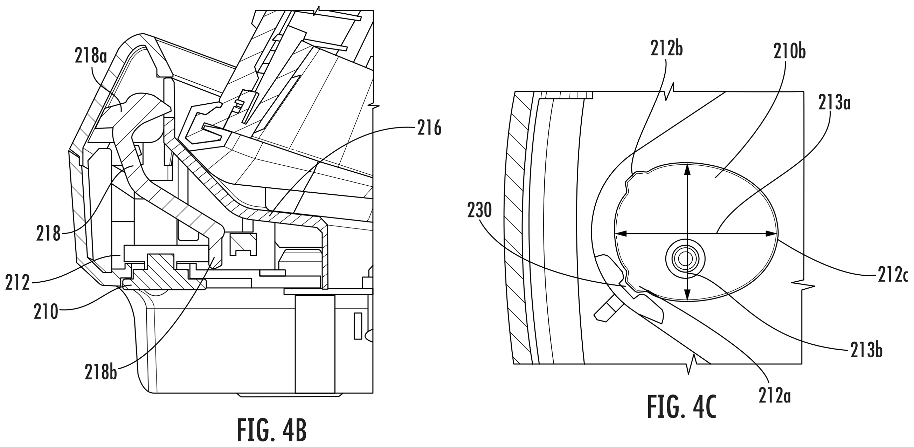

As illustrated in FIGS. 4A-C, when the latch switch 210 is in the first switch position, the switch cover 212 engages the pivot portion 218b of the latch 218 and pushes the pivot portion 218b towards the cup 216, causing the head coupling portion 218a of the latch 218 to move backwards away from the cup 216 (e.g., retract) such that the head coupling portion 218a does not extend into the first interior 206 of the head receiving portion 204 (e.g., first interior 206 of the cup 216). In this regard, the head coupling portion 218a may not engage the head portion 304 of the electronic device 300, thus allowing for a user to drop the electronic device towards the docking device 200 without the need to apply further force to insert the head portion 304 of the electronic device 300 into the head receiving portion 204 or to align the head portion 304 when it is dropped.

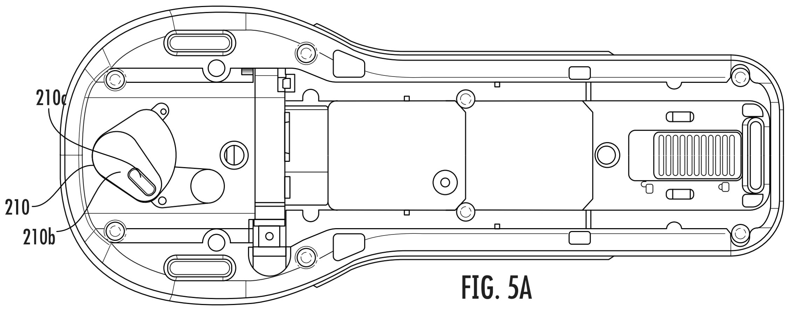

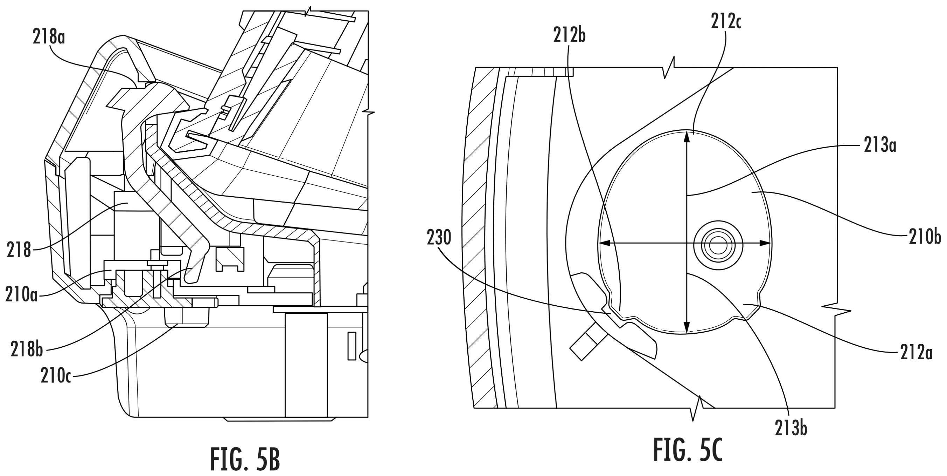

As illustrated in FIGS. 5A-C, when the latch switch 210 is in the second switch position, the switch cover 212 does not engage the pivot portion 218b of the latch 218, causing the head coupling portion 218a of the latch 218 to move towards the cup 216 or otherwise positioned such that the head coupling portion 218a extends into the first interior 206 of the head receiving portion 204 (e.g., first interior 206 of the cup 216). In this regard, the head coupling portion 218a engages the head portion 304 of the electronic device 300, thus allowing for the docking device to retain the electronic device 300 therein in a vertical application and/or mobile application of the docking device 200. The second switch position may require a user to apply an amount of force to cause the head coupling portion 218a to be inserted into the coupling portion 310 on the head portion 304 of the electronic device 300.

In this regard, in some embodiments, the docking device 200 is caused to be in the first coupling mode when the latch switch is moved to the first switch position and caused to be in second coupling mode when the latch switch 210 is moved to the second switch position. Specifically, in some embodiments, the docking device 200 is configured to be in the first coupling mode when the latch 218 is in the first latch configuration (due to the latch switch 210 being in the first switch position) and the retractable member(s) 210a are in a first retractable member configuration thereof (due to the bottom switch 240 being in the first position thereof). Additionally, in some embodiments, the docking device 200 is configured to be in the second coupling mode when the latch 218 is in the second latch configuration (due to the latch switch 210 being in the second switch position thereof) and the retractable member(s) 210a are in a second retractable member configuration thereof (due to the bottom switch 240 being in second position thereof).

The switch cover 212 may define one or more locking portions each configured for releasably locking the switch 210 in a particular position corresponding to a particular latch configuration. In some embodiments, the switch cover 212 may define at least a first locking portion 212a extending from a perimeter of the switch cover 212 and a second locking portion 212b extending from the perimeter of the switch cover 212.

As shown in FIGS. 4C and 5C, the switch cover 212 may have a substantially oval shape with a first length 213a along a major axis of the oval shape and a second length 213b along a minor axis of the oval shape, wherein the first length 213a is longer than the second length 213b As shown, in FIG. 4C, when the latch switch 210 is in the first switch position, the switch cover 212 may be positioned with the major axis (e.g., long side) thereof (e.g., having the first length 213a) substantially horizontal or otherwise substantially parallel with the bottom portion of the docking device 200 (or conversely, the minor axis is substantially vertical or otherwise substantially perpendicular relative to the bottom portion of the docking device 200), such that switch cover 212 engages the pivot portion 218b of the latch 218 at the end 212c of the switch cover 212. In some examples, the end 212c may represent the highest point/apex of the oval shaped switch cover 212. As shown in FIG. 4C, when the latch switch 210 is in the first switch position, the first locking portion 212a of the switch cover 212 may be positioned in a recess 230 to maintain the switch cover in its current position.

As shown, in FIG. 5C, when the latch switch 210 is in the second switch position, the switch cover 212 may be positioned with the minor axis (e.g., short side) thereof (e.g., having the second length 213b) substantially horizontal or otherwise substantially parallel with the bottom portion of the docking device 200 (or conversely, the major axis substantially vertical or otherwise substantially perpendicular relative to the bottom portion of the docking device 200), such that switch cover 212 does not engage the pivot portion 218b of the latch 218. For example, the end 212c of the switch cover 212 (which may represent the highest point/apex) of the switch cover 212 may point away from the pivot portion 218b of the latch 218. As shown in FIG. 5C, when the latch switch 210 is in the second switch position, the second locking portion 212b of the switch cover 212 may be positioned in the recess 230 to maintain the switch cover 212 in its current position.

In some embodiments, the first coupling mode may correspond to a disabled mode of the docking device (e.g., where the latch 218 is not being used to secure the head portion 304 of the electronic device 300 to the first receiving portion 204 of the docking device 200 and/or the retractable member(s) 210a are not being used to secure the bottom portion 306 of the electronic device 300 to the second receiving portion 208). In some embodiments, the second coupling mode corresponds to an active mode of the docking device (e.g., where the latch 218 is being used to secure the head portion 304 of the electronic device 300 to the first receiving portion 204 of the docking device 200 and/or the retractable member(s) 210a are being used to secure the bottom portion 306 of the electronic device 300 to the second receiving portion 208). In some embodiments, in the second coupling mode, the head coupling portion 218a may be configured to extend a first length within the first interior 206 defined by the docking device 200 (e.g., defined by the cup 216 thereof) and/or the opening defined by the electronic device 300 when the electronic device 300 is docked or otherwise positioned within the docking device 200. In some embodiments having a third coupling mode, the head coupling portion 218a may be configured to extend a second length within the first interior 206 defined by the docking device 200 and/or the opening defined by the electronic device 300 when the electronic device 300 is docked or otherwise positioned within the docking device 200. In this regard, the force required to couple and/or decouple the electronic device 300 relative to the docking device 200 may be less in the first coupling mode relative to the second coupling mode and may be less in the second coupling mode relative to the third coupling mode.

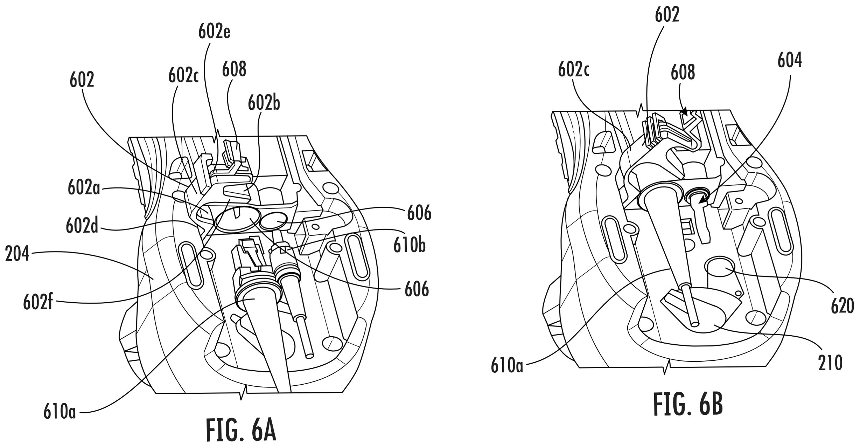

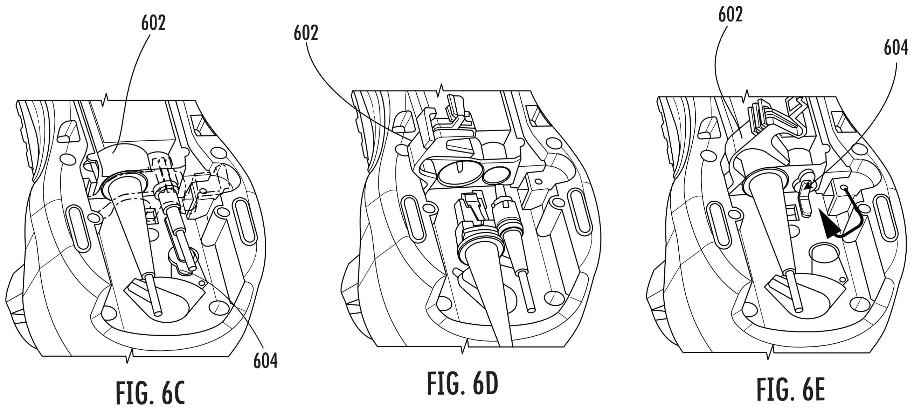

FIGS. 6A-6E illustrates a bottom view of a portion of the docking device 200 in accordance with at least some embodiments of the present disclosure. Specifically FIGS. 6A-6E illustrates a portion of the bottom the docking device 200 configured for receiving one or more cables (e.g., power cables) such as cables 610a and/or 610b. As shown in FIGS. 6A-E, in some embodiments, the docking device 200 may include a rotational lock 602 and/or one or more plugs (e.g., one or more plug sealings 604 such as rubber plug sealing 604). The rotational lock 602 may be configured to hold the one or more cables securely. For example, the rotational lock 602 may be configured to secure the one or more cables to the docking device 200. Additionally, or alternatively, the rotational lock 602 may be configured to provide a sealing functionality. For example, the rotational lock 602 may be configured for sealing the one or more cables 610a, 610b from water ingress. As shown in FIG. 6C, the rotational lock 602 may be rotated to a locking position to secure the one or more cables 610a, 610b. As shown in FIG. 6D, the rotational lock 602 may be rotated to an unlock position such that the one or more cables 610a, 610b may be released.

The rotational lock 602 may define one or more openings. In some embodiments, the rotational lock 602 defines a first opening 602a and a second opening 602b. Each opening may be surrounded by a top wall and side walls. In some embodiments, the rotational lock 602 comprises a top wall 602c, a first side wall 602d, a second wall 602e, and a middle wall 602f, that define the first opening 602a and the second opening 602b. The rotational lock 602 may be configured for being rotated about an axis and towards the cable receiving portions 606, such that rotational lock may be positioned over the one or more cables coupled to the docking device 200 when in a locking position.

Additionally, or alternatively, the rotational lock 602 may be configured for being rotated about the axis and away from the cable receiving portions 606, such that the rotational lock 602 may be released to allow for the one or more cables to be removed. In some embodiments, the rotational lock 602 includes a release feature 608 configured to facilitate quick release of the rotational lock 602 and/or allow for the rotational lock 602 to be released with ease. In some embodiments, the release feature 608 may be configured to pressed or otherwise moved towards the second side wall 602e to cause the rotational lock 602 to be released from the one or more cables. The rotational lock may be made from plastic material, composite material, and/or other suitable material. In some embodiments, the one or more plugs 604 may be configured for being inserted into the one or more of the cable receiving portions 606 when the one or more cables (or portion thereof is removed). For example, in a scenario where one of the cables 610a, 610b is removed, the one or more plugs 604 may be inserted to fill the opening and to prevent water ingress. As shown in FIGS. 6A-6E, the bottom portion of the docking device 200 may define one or more openings 620 that are configured to receive the one or more plugs 604 when the one or more plugs 604 are not in use. The one or more plugs 604 may be configured for being removed from the one or more openings and positioned within a cable opening of the docking device when a cable is removed.

### CONCLUSION

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single product or packaged into multiple products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

Further, while this detailed description has set forth some embodiments of the present disclosure, the appended claims may cover other embodiments of the present disclosure which differ from the described embodiments according to various modifications and improvements. Further, within the appended claims, unless the specific terms "means for" or "step for" is used within a given claim, it is not intended that the claim be interpreted under 35 U.S.C. § 112, paragraph (f).

## Claims

1. An electronic device system comprising:
an electronic device comprising a head portion;
a docking device for releasably securing the electronic device to the docking device, wherein the docking device is operable in at least two coupling modes; the docking device comprising:
a latch movable between a first latch configuration corresponding to a first coupling mode of the at least two coupling modes and a second latch configuration corresponding to a second coupling mode of the at least two coupling modes, wherein the latch and the head portion are spaced apart when the docking device is in the first coupling mode, and wherein the latch engages the head portion when the docking device is in the second coupling mode; and
a switch assembly coupled to the latch, wherein the latch is configured for being moved between the first latch configuration and the second latch configuration via operation of the switch assembly.

2. The electronic device system of claim 1, wherein the electronic device is a handheld scanner, and wherein the electronic device further comprises a handle portion extending between the head portion and a bottom portion of the electronic device.

3. The electronic device system of claim 1, wherein the latch comprises a head coupling portion, and wherein the electronic device defines an opening configured to receive the head coupling portion when in the second coupling mode.

4. The electronic device system of claim 3, wherein the head coupling portion is configured to extend a first length within the opening defined by the electronic device when the latch is in the second latch configuration.

5. The electronic device system of claim 4, wherein the head coupling portion is configured to extend a second length within the opening defined by the electronic device when the latch is in a third latch configuration, wherein the second length is longer than the first length.

6. The electronic device system of claim 3, wherein the switch assembly comprises a latch switch and a switch cover mounted on the latch switch, wherein the latch switch defines an outer facing portion of the switch assembly accessible to a user and the switch cover defines an inner facing portion of the switch assembly.

7. The electronic device system of claim 6, wherein the switch cover is substantially oval.

8. The electronic device system of claim 6, wherein the docking device comprises a head receiving portion and a bottom receiving portion, wherein the head receiving portion is configured to receive the head portion of the electronic device and the bottom receiving portion is configured to receive a bottom portion of the electronic device.

9. The electronic device system of claim 8, wherein at least one of the head receiving portion or the bottom receiving portion comprises one or more alignment features configured to facilitate gravity drop-in of the electronic device with respect to the docking device.

10. The electronic device system of claim 8, wherein the latch further comprises a pivot portion configured to cause the latch to rotate when the pivot portion is engaged.

11. The electronic device system of claim 10, wherein the latch switch is configured for being moved between at least a first position corresponding to the first coupling mode and a second position corresponding to the second coupling mode, wherein the switch cover engages the pivot portion when the latch switch is in the first position, and wherein the head coupling portion of the latch is configured to be positioned outside of an interior of the head receiving portion of the docking device.

12. The electronic device system of claim 11, wherein the switch cover and the pivot portion are spaced apart when the latch switch is in the second coupling mode, wherein the head coupling portion of the latch is configured to extend within the interior of the docking device.

13. The electronic device system of claim 12, wherein the first coupling mode is configured for a horizontal application of the docking device, and wherein the second coupling mode is configured for a vertical application or a mobile application of the docking device.

14. The electronic device system of claim 11, wherein the switch cover comprises at least a first locking portion corresponding to the first position of the latch switch and a second locking portion corresponding to the second position of the latch switch.

15. A docking device for releasably securing an electronic device to the docking device, the docking device comprising:
a latch movable between a first latch configuration corresponding to a first coupling mode of the docking device and a second latch configuration corresponding to a second coupling mode of the docking device, wherein the latch and the electronic device are spaced apart when the docking device is in the first coupling mode, and wherein the latch engages the electronic device when the docking device is in the second coupling mode; and
a switch assembly coupled to the latch, wherein the latch is configured for being moved between the first latch configuration and the second latch configuration via operation of the switch assembly.
